# EUROPÄISCHE PATENTANMELDUNG

(11) **EP 2 798 954 A1**
(43) Veröffentlichungstag der Anmeldung: **05.11.2014**
(21) Anmeldenummer: 13165986.4
(22) Anmeldetag: 30.04.2013
(51) Int. Cl.: A01N 3/04, A01N 25/10, A01N 43/40, A01N 47/24

(54) **Aufbringen einer pestizidhaltigen Dispersion eines aliphatischen Polyurethans auf Pflanzen**

(71) Anmelder: BASF SE, 67056 Ludwigshafen (DE)
(72) Erfinder: Schneider, Karl-Heinrich, 67271 Kleinkarlbach (DE); Parenti, Antonio, 69115 Heidelberg (DE); Merk, Michael, 20020 Arese (IT); Fröhling, Peter, 67251 Freinsheim (DE); Nolte, Marc, 68165 Mannheim (DE); Blanz, Birgit, 67435 Neustadt (DE); Henkes, Steffen, 67459 Böhl-Iggelheim (DE); Häberle, Karl, 67346 Speyer (DE)

(57) **Zusammenfassung**

Die vorliegende Erfindung betrifft ein Verfahren zum Aufbringen einer wässrigen, Pestizidhaltigen Dispersion eines Polyurethans welches aufgebaut ist aus Diisocyanaten (a) und Diolen (b), auf Pflanzen oder Pflanzenteile. Weiterhin betrifft die Erfindung eine wässrige Pestizidhaltige Dispersion eines Polyurethans, welches aufgebaut ist aus Diisocyanaten (a) und Diolen (b). Außerdem betrifft sie eine Verwendung der Dispersion zur Bekämpfung von phytopathogenen Pilzen und/oder unerwünschtem Pflanzenwuchs und/oder unerwünschtem Insekten- oder Milbenbefall und/oder zur Regulation des Wachstums von Pflanzen, indem man die Dispersion auf die jeweiligen Schädlinge, deren Lebensraum und/oder die vor dem jeweiligen Schädling zu schützenden Pflanzen, Pflanzenteile, den Boden und/oder auf unerwünschte Pflanzen und/oder die Nutzpflanzen und/oder deren Lebensraum einwirken lässt.

## Beschreibung

Die vorliegende Erfindung betrifft ein Verfahren zum Aufbringen einer wässrigen, Pestizid-haltigen Dispersion eines Polyurethans welches aufgebaut ist aus Diisocyanaten (a) und Diolen (b), auf Pflanzen oder Pflanzenteile. Weiterhin betrifft die Erfindung eine wässrige Pestizid-haltige Dispersion eines Polyurethans, welches aufgebaut ist aus Diisocyanaten (a) und Diolen (b). Außerdem betrifft sie eine Verwendung der Dispersion zur Bekämpfung von phytopathogenen Pilzen und/oder unerwünschtem Pflanzenwuchs und/oder unerwünschtem Insekten- oder Milbenbefall und/oder zur Regulation des Wachstums von Pflanzen, indem man die Dispersion auf die jeweiligen Schädlinge, deren Lebensraum und/oder die vor dem jeweiligen Schädling zu schützenden Pflanzen, Pflanzenteile, den Boden und/oder auf unerwünschte Pflanzen und/oder die Nutzpflanzen und/oder deren Lebensraum einwirken lässt. Kombinationen bevorzugter Merkmale mit anderen bevorzugten Merkmalen werden von der vorliegenden Erfindung umfasst.

Pflanzen sind nicht nur der Witterung, sondern auch dem Angriff von Schädlingen ausgesetzt. Dazu gehören Bakterien, Hefen, Viren, aber vor allem Insekten und Schadpilze. Diese nutzen die Oberfläche von Pflanzen, Pflanzenteilen oder Wunden, um einzudringen. Daher ist ein ausreichender Schutz von Oberflächen, Poren oder Wunden von Pflanzen erforderlich.

Es ist bekannt, dass eine Reihe von Pflanzenpathogenen wie Bakterien, Hefen, Viren, aber vor allem Schadpilze in Gehölzwunden, wie sie z.B. durch den Instandhaltungsschnitt von Obstbäumen oder durch Wildfrass sowie durch Veredlungsverfahren entstehen, eindringen und von dort aus die ganze Pflanze infizieren. Eine solche Infektion kann zum Qualitätsverlust des Holzes, zur Krankheit der Pflanze oder zu Ernteminderungen, bis zum Verlust der Tragfähigkeit der Holzteile oder zum Absterben der Pflanze führen. Häufig sind diese Schädigungen irreparabel. Zur Vermeidung solcher Infektionen über die Wunde werden Gehölzwunden in der Regel luft- und wasserdicht mit Hilfe von z.B. Baumwachs verschlossen. Der Verschluss von Holzwunden, z.B. Schnittwunden bei Reben, durch Teer oder eine Substanz mit desinfizierender Wirkung ist seit den dreißiger Jahren des 20. Jahrhunderts bekannt. Verschiedene harzartige Substanzen sind zur Oberflächenbehandlung und zum Wundverschluss bei Pflanzen eingesetzt worden. Anfangs bevorzugte man Teer oder Bitumen. Diese Materialien werden jedoch mit der Zeit spröde und erlauben einen nachfolgenden Angriff der Pathogene.

In jüngerer Zeit hat die Holzkrankheit Esca (abgeleitet sich vom griechischen Yska, was "verfaultes Holz" bedeutet) an Weinreben zunehmend zu Problemen im Weinbau geführt. Esca umfasst einen Komplex von Pilzpathogenen. Die Pathogene, die nach der Literatur mit Esca-Symptomen in Zusammenhang gebracht wurden, sind Fomitiporia punctata (syn. Phellinus punctatus), Fomitiporia mediterrana, Phaeoacremonium spp., Phaeoacremonium aleophilum und Phaemoniella chlamydosporum. Ein besonderer Pilz, der aus dem Holz Esca-infizierter Rebstöcke isoliert wurde, ist Fomitiporia mediterrana (Weißfäulepilz). Die Besiedlung der Rebstöcke durch die Erreger findet über Verletzungen insbesondere über Schnittwunden statt, die mehrere Monate empfindlich für Infektionen sind. Die über Luft verbreiteten Sporen bzw. Konidien landen auf den Schnittwunden und wachsen in die Rebstöcke hinein. Die Durchseuchung des Holzkörpers erfolgt über mehrere Jahre bis erste Symptome sichtbar werden. Das Holz vermorscht und die Leitbahnen werden zerstört. Bisher sind keine wirksamen Schutzmaßnahmen gegen Esca bekannt, außer der Minimierung des Infektionspotentials, in dem befallenes Holz aus der Anlage entfernt wird. Ein mechanischer Schutz der offenen Stellen nach dem Rebschnitt kann durch Aufbringen von Wundverschlussmittel auf die Schnittstellen erreicht werden, das das Eindringen der Erreger verhindert.

Die WO 09/040339 offenbart eine flüssige Zusammensetzung, enthaltend ein wasserunlösliches Verschlussmaterial in gelöster oder dispergierter Form, einen Pflanzenschutzwirkstoff, ein flüchtiges Verdünnungsmittel, und eine nichtionische oberflächenaktive Substanz in einer Menge von 10 bis 100 Gew.-%, bezogen auf das Verschlussmaterial. Das Verschlussmaterial kann beispielsweise ein Polyurethan sein. Nachteilig ist der hohe Gehalt an oberflächenaktiver Substanz in der Zusammensetzung.

WO 2010/142618 offenbart eine wässrige, Pestizid-haltige Dispersion eines Polyurethans, das aus aliphatischen und aromatischen Polyisocyanaten aufgebaut ist.

Aufgabe der vorliegenden Erfindung war daher, ein Verfahren zu finden, um auf die Oberflächen von Pflanzen oder Pflanzenteilen eine Schutzschicht aufzubringen. Das Verfahren sollte eine einfache Aufbringung, zum Beispiel durch Sprühen, erlauben. Weitere Aufgabe war, dass das Verfahren zu einer lang anhaltenden Schutzschicht führen soll. Insbesondere war eine Aufgabe, ein Verfahren zu finden zur protektiven Behandlung pilzlicher Erkrankungen an Holzpflanzen, speziell zur Behandlung von Esca in Wein.

Die Aufgabe wurde gelöst durch ein Verfahren zum Aufbringen einer wässrigen, Pestizid-haltigen Dispersion eines Polyurethans,welches aufgebaut ist aus Diisocyanaten (a) und Diolen (b), auf Pflanzen oder Pflanzenteile, wobei das Diisocyanat höchstens 5 Gew.% aromatisches Diisocyanat und mindestens 95 Gew.% aliphatisches Diisocyanat enthält, jeweils bezogen auf das Diisocyanat (a).

Ein erster Gegenstand der Erfindung betrifft daher ein solches Verfahren zum Aufbringen einer wässrigen, Pestizid-haltigen Dispersion eines Polyurethans auf Pflanzen oder Pflanzenteile. Ein weiterer Gegenstand ist eine wässrige Pestizid-haltige Dispersion eines Polyurethans welches aufgebaut ist aus Diisocyanaten (a) und Diolen (b), wobei das Diisocyanat (a) höchstens 5 Gew.% aromatisches Diisocyanat und mindestens 95 Gew.% aliphatisches Diisocyanat enthält, jeweils bezogen auf das Diisocyanat (a).

Das Polyurethan ist aufgebaut aus Diisocyanaten (a) und Diolen (b), wobei das Diisocyanat (a) höchstens 5 Gew.% aromatisches Diisocyanat und mindestens 95 Gew.% aliphatisches Diisocyanat enthält, jeweils bezogen auf das Diisocyanat (a).
Das Polyurethan ist bevorzugt aufgebaut aus
a) Diisocyanaten, wobei das Diisocyanat (a) höchstens 5 Gew.% (bevorzugt höchstens 1 Gew.%) aromatisches Diisocyanat und mindestens 95 Gew.% (bevorzugt mindestens 99 Gew.%) aliphatisches Diisocyanat enthält, jeweils bezogen auf das Diisocyanat (a),
b) Diolen (b1) und (b2), von denen
   b1) 10 bis 100 mol-%, bezogen auf die Gesamtmenge der Diole (b), ein Molekulargewicht von 500 bis 5000 aufweisen, und
   b2) 0 bis 90 mol-%, bezogen auf die Gesamtmenge der Diole (b), ein Molekulargewicht von 60 bis 500 g/mol aufweisen,
c) gegebenenfalls von den Monomeren (a) und (b) verschiedene Monomere mit wenigstens einer Isocyanatgruppe oder wenigstens einer gegenüber Isocyanatgruppen reaktiven Gruppe, die darüber hinaus wenigstens eine hydrophile Gruppe oder eine potentiell hydrophile Gruppe tragen, wodurch die Wasserdispergierbarkeit der Polyurethane bewirkt wird,
d) gegebenenfalls weiteren von den Monomeren (a) bis (c) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und
e) gegebenenfalls von den Monomeren (a) bis (d) verschiedenen einwertigen Verbindungen mit einer reaktiven Gruppe, bei der es sich um eine alkoholische Hydroxylgruppe, eine primäre oder sekundäre Aminogruppe oder eine Isocyanatgruppe handelt.

Das Polyurethan ist meist erhältlich durch Umsetzung der Monomere a), b), und gegebenenfalls c), d) und/oder e). Das Polyurethan ist bevorzugt erhältlich durch Umsetzung der Monomere a), b), c) und gegebenenfalls d) und/oder e).

Insbesondere zu nennen sind als **Monomere (a)** Diisocyanate X(NCO)₂, wobei X für einen aliphatischen Kohlenwasserstoffrest mit 4 bis 12 Kohlenstoffatomen, oder einen cycloaliphatischen Kohlenwasserstoffrest mit 6 bis 15 Kohlenstoffatomen steht. Beispiele derartiger Diisocyanate sind Tetramethylendiisocyanat, Hexamethylendiisocyanat (HDI), Dodecamethylendiisocyanat, 1,4-Diisocyanatocyclohexan, 1-Isocyanato-3,5,5-trimethyl-5-isocyanatomethylcyclohexan (IPDI), 2,2-Bis-(4-isocyanatocyclohexyl)-propan, Trimethylhexandiisocyanat, die Isomeren des Bis-(4-isocyanatocyclohexyl)methans (HMDI) wie das trans/trans-, das cis/cis- und das cis/trans-Isomere sowie aus diesen Verbindungen bestehende Gemische. Besonders bevorzugt sind IPDI und/oder HMDI.

Derartige Diisocyanate sind im Handel erhältlich.

Zum Aufbau der Polyurethane kann man als Verbindungen außer den vorgenannten auch Isocyanate einsetzen, die neben den freien Isocyanatgruppen weitere verkappte Isocyanatgruppen, z.B. Uretdiongruppen tragen.

Bei den Diolen (b1) handelt es sich insbesondere um Polyesterpolyole, die z.B. aus Ullmanns Encyklopädie der technischen Chemie, 4. Auflage, Band 19, S. 62 bis 65 bekannt sind. Das Polyesterol hat bevorzugt ein zahlenmittleres Molekulargewicht von unter 10.000 g/mol, bevorzugt von 500 bis 6000 g/mol und insbesondere von 800 bis 4000 g/mol.

Bevorzugt werden **Polyesterpolyole** eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren. Bevorzugt sind Dicarbonsäuren der allgemeinen Formel HOOC-(CH₂)_{y}-COOH, wobei y eine Zahl von 1 bis 20, bevorzugt eine gerade Zahl von 2 bis 20 ist, z.B. Bernsteinsäure, Adipinsäure, Sebacinsäure und Dodecandicarbonsäure.

Als mehrwertige Alkohole kommen z.B. Ethylenglykol, Propan-1,2- diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel HO-(CH₂)ₓ-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12- diol. Weiterhin bevorzugt ist Neopentylglykol.

Ferner kommen auch Polycarbonat-Diole, wie sie z.B. durch Umsetzung von Phosgen mit einem Überschuß von den als Aufbaukomponenten für die Polyesterpolyole genannten niedermolekularen Alkohole erhalten werden können, in Betracht.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinheit auch durch einen C₁- bis C₄-Alkylrest substituiert sein kann. Beispiele sind ε-Caprolacton, β-Propiolacton, γ-Butyrolacton und/oder Methyl-ε-caprolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Daneben kommen als Monomere (b1) **Polyetherdiole** in Betracht. Sie sind insbesondere durch Polymerisation von Ethylenoxid, Propylenoxid, Butylenoxid, Tetrahydrofuran, Styroloxid oder Epichlorhydrin mit sich selbst, z.B. in Gegenwart von BF₃ oder durch Anlagerung dieser Verbindungen gegebenenfalls im Gemisch oder nacheinander, an Startkomponenten mit reaktionsfähigen Wasserstoffatomen, wie Alkohole oder Amine, z.B. Wasser, Ethylenglykol, Propan-1,2-diol, Propan-1,3-diol, 1,2-Bis(4-hydroxydiphenyl)-propan oder Anilin erhältlich. Besonders bevorzugt ist Polytetrahydrofuran eines Molekulargewichts von 240 bis 5000, und vor allem 500 bis 4500. Daneben können auch Mischungen aus Polyesterdiolen und Polyetherdiolen als Monomere (b1) eingesetzt werden.

Ebenfalls geeignet sind Polyhydroxyolefine, bevorzugt solche mit 2 endständigen Hydroxylgruppen, z.B. a,-w-Dihydroxypolybutadien, a,-w- Dihydroxypolymethacrylester oder a,-w-Dihydroxypolyacrylester als Monomere (c1). Solche Verbindungen sind beispielsweise aus der EP-A 0622378 bekannt. Weitere geeignete Polyole sind Polyacetale, Polysiloxane und Alkydharze.

Die Polyole können auch als Gemische im Verhältnis 0,1 : 1 bis 1 : 9 eingesetzt werden.

Die Härte und der Elastizitätsmodul der Polyurethane lassen sich erhöhen, wenn als Diole (b) neben den Diolen (b1) noch niedermolekulare Diole (b2) mit einem Molekulargewicht von etwa 60 bis 500, vorzugsweise von 62 bis 200 g/mol, eingesetzt werden.

Als **Monomere (b2)** werden vor allem die Aufbaukomponenten der für die Herstellung von Polyesterpolyolen genannten kurzkettigen Alkandiole eingesetzt, wobei Diole mit 2 bis 12 C-Atomen, unverzweigte Diole mit 2 bis 12 C-Atomen und einer gradzahligen Anzahl von C-Atomen sowie Pentan-1,5-diol und Neopentylglykol bevorzugt werden.

Bevorzugt beträgt der Anteil der Diole (b1), bezogen auf die Gesamtmenge der Diole (b) 10 bis 100 mol-% und der Anteil der Monomere (b2), bezogen auf die Gesamtmenge der Diole (b) 0 bis 90 mol-%. Besonders bevorzugt beträgt das Verhältnis der Diole (b1) zu den Monomeren (b2) 0,1 : 1 bis 5:1, besonders bevorzugt 0,2 : 1 bis 2 : 1.

Um die Wasserdispergierbarkeit der Polyurethane zu erreichen, sind die Polyurethane neben den Komponenten (a), (b) und gegebenenfalls (d) aus von den Komponenten (a), (b) und (d) verschiedenen **Monomeren (c),** die wenigstens eine Isocyanatgruppe oder wenigstens eine gegenüber Isocyanatgruppen reaktive Gruppe und darüber hinaus wenigstens eine hydrophile Gruppe oder eine Gruppe, die sich in eine hydrophile Gruppe überführen läßt, tragen, aufgebaut. Im folgenden Text wird der Begriff " hydrophile Gruppen oder potentiell hydrophile Gruppen" mit " (potentiell) hydrophile Gruppen" abgekürzt. Die (potentiell) hydrophilen Gruppen reagieren mit Isocyanaten wesentlich langsamer als die funktionellen Gruppen der Monomere, die zum Aufbau der Polymerhauptkette dienen.

Der Anteil der Komponenten mit (potentiell) hydrophilen Gruppen an der Gesamtmenge der Komponenten (a), (b), (c), (d) und (e) wird im allgemeinen so bemessen, daß die Molmenge der (potentiell) hydrophilen Gruppen, bezogen auf die Gewichtsmenge aller Monomere (a) bis (e), 30 bis 1000, bevorzugt 50 bis 500 und besonders bevorzugt 80 bis 300 mmol/kg beträgt.

Bei den (potentiell) hydrophilen Gruppen kann es sich um nichtionische oder bevorzugt um (potentiell) ionische hydrophile Gruppen handeln.

Als nichtionische hydrophile Gruppen kommen insbesondere Polyethylenglycolether aus vorzugsweise 5 bis 100, bevorzugt 10 bis 80 Ethylenoxid-Wiederholungseinheiten, in Betracht. Der Gehalt an Polyethylenoxid-Einheiten beträgt im allgemeinen 0 bis 10, bevorzugt 0 bis 6 Gew.-%, bezogen auf die Gewichtsmenge aller Monomere (a) bis (e).

Bevorzugte Monomere mit nichtionischen hydrophilen Gruppen sind Polyethylenoxiddiole, Polyethylenoxidmonoole sowie die Reaktionsprodukte aus einem Polyethylenglykol und einem Diisocyanat, die eine endständig veretherten Polyethylenglykolrest tragen. Derartige Diisocyanate sowie Verfahren zu deren Herstellung sind in den Patentschriften US-A 3 905 929 und US-A 3 920 598 angegeben.

lonische hydrophile Gruppen sind vor allem anionische Gruppen wie die Sulfonat-, die Carboxylat- und die Phosphatgruppe in Form ihrer Alkalimetall- oder Ammoniumsalze sowie kationische Gruppen wie Ammonium-Gruppen, insbesondere protonierte tertiäre Aminogruppen oder quartäre Ammoniumgruppen.

Potentiell ionische hydrophile Gruppen sind vor allem solche, die sich durch einfache Neutralisations-, Hydrolyse- oder Quaternisierungsreaktionen in die oben genannten ionischen hydrophilen Gruppen überführen lassen, also z.B. Carbonsäuregruppen oder tertiäre Aminogruppen.

(Potentiell) ionische Monomere (c) sind z.B. in Ullmanns Encyklopädie der technischen Chemie, 4. Auflage, Band 19, S.311-313 und beispielsweise in der DE-A 1 495 745 ausführlich beschrieben.

Als (potentiell) kationische Monomere (c) sind vor allem Monomere mit tertiären Aminogruppen von besonderer praktischer Bedeutung, beispielsweise: Tris-(hydroxyalkyl)-amine, N,N' - Bis(hydroxyalkyl)-alkylamine, N-Hydroxyalkyl-dialkylamine, Tris-(aminoalkyl)-amine, N,N' - Bis(aminoalkyl)-alkylamine, N-Aminoalkyl-dialkylamine, wobei die Alkylreste und Alkandiyl-Einheiten dieser tertiären Amine unabhängig voneinander aus 1 bis 6 Kohlenstoffatomen bestehen. Weiterhin kommen tertiäre Stickstoffatome aufweisende Polyether mit vorzugsweise zwei endständigen Hydroxylgruppen, wie sie z.B. durch Alkoxylierung von zwei an Aminstickstoff gebundene Wasserstoffatome aufweisende Amine, z.B. Methylamin, Anilin oder N,N' - Dimethylhydrazin, in an sich üblicher Weise zugänglich sind, in Betracht. Derartige Polyether weisen im Allgemeinen ein zwischen 500 und 6000 g/mol liegendes Molgewicht auf.

Diese tertiären Amine werden entweder mit Säuren, bevorzugt starken Mineralsäuren wie Phosphorsäure, Schwefelsäure, Halogenwasserstoffsäuren oder starken organischen Säuren oder durch Umsetzung mit geeigneten Quaternisierungsmitteln wie C₁- bis C₆-Alkylhalogeniden oder Benzylhalogeniden, z.B. Bromiden oder Chloriden, in die Ammoniumsalze überführt.

Als Monomere mit (potentiell) anionischen Gruppen kommen üblicherweise aliphatische, cycloaliphatische, araliphatische oder aromatische Carbonsäuren und Sulfonsäuren in Betracht, die mindestens eine alkoholische Hydroxylgruppe oder mindestens eine primäre oder sekundäre Aminogruppe tragen. Bevorzugt sind Dihydroxyalkylcarbonsäuren, vor allem mit 3 bis 10 Kohlenstoffatomen, wie sie auch in der US-A 3 412 054 beschrieben sind. Insbesondere sind Verbindungen der allgemeinen Formel (c₁) 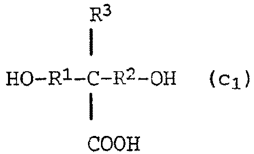 in welcher R¹ und R² für eine C₁- bis C₄-Alkandiyl-Einheit und R³ für eine C₁- bis C₄-Alkyl-Einheit steht und vor allem Dimethylolpropionsäure (DMPA) bevorzugt.

Weiterhin eignen sich entsprechende Dihydroxysulfonsäuren und Dihydroxyphosphonsäuren wie 2,3-Dihydroxypropanphosphonsäure.

Ansonsten geeignet sind Dihydroxylverbindungen mit einem Molekulargewicht über 500 bis 10000 g/mol mit mindestens 2 Carboxylatgruppen, die aus der DE-A 3 911 827 bekannt sind. Sie sind durch Umsetzung von Dihydroxylverbindungen mit Tetracarbonsäuredianhydriden wie Pyromellitsäuredianhydrid oder Cyclopentantetracarbonsäuredianhydrid im Molverhältnis 2 : 1 bis 1,05 : 1 in einer Polyadditionsreaktion erhältlich. Als Dihydroxylverbindungen sind insbesondere die als Kettenverlängerer aufgeführten Monomere (b2) sowie die Diole (b1) geeignet.

Als Monomere (c) mit gegenüber Isocyanaten reaktiven Aminogruppen kommen Aminocarbonsäuren wie Lysin, ß-Alanin oder die in der DE- A 2034479 genannten Addukte von aliphatischen diprimären Diaminen an a,ß-ungesättigte Carbon- oder Sulfonsäuren in Betracht.

Solche Verbindungen gehorchen beispielsweise der Formel (c₂)

H₂N-R⁴-NH-R⁵-X (c₂)

in der R⁴ und R⁵ unabhängig voneinander für eine C₁- bis C₆-Alkandiyl-Einheit, bevorzugt Ethylen und X für COOH oder SO₃H stehen.

Besonders bevorzugte Verbindungen der Formel (c₂) sind die N-(2-Aminoethyl)-2-aminoethancarbonsäure sowie die N-(2-Aminoethyl)-2-aminoethansulfonsäure bzw. die entsprechenden Alkalisalze, wobei Na als Gegenion besonders bevorzugt ist.

Weiterhin bevorzugt sind die Addukte der oben genannten aliphatischen diprimären Diamine an 2-Acrylamido-2-methylpropansulfonsäure, wie sie z.B. in der DE Patentschrift 1 954 090 beschrieben sind.

Sofern Monomere mit potentiell ionischen Gruppen eingesetzt werden, kann deren Überführung in die ionische Form vor, während, jedoch vorzugsweise nach der Isocyanat-Polyaddition erfolgen, da sich die ionischen Monomeren in der Reaktionsmischung häufig nur schwer lösen. Besonders bevorzugt liegen die Sulfonat- oder Carboxylatgruppen in Form ihrer Salze mit einem Alkaliion oder einem Ammoniumion als Gegenion vor.

Die **Monomere (d),** die von den Monomeren (a) bis (c) verschieden sind und welche gegebenenfalls auch Bestandteile des Polyurethans sind, dienen im Allgemeinen der Vernetzung oder der Kettenverlängerung. Es sind im allgemeinen mehr als zweiwertige nicht-phenolische Alkohole, Amine mit 2 oder mehr primären und/oder sekundären Aminogruppen sowie Verbindungen, die neben einer oder mehreren alkoholischen Hydroxylgruppen eine oder mehrere primäre und/oder sekundäre Aminogruppen tragen.

Alkohole mit einer höheren Wertigkeit als 2, die zur Einstellung eines gewissen Verzweigungs- oder Vernetzungsgrades dienen können, sind z.B. Trimethylolpropan, Glycerin oder Zucker.

Ferner kommen Monoalkohole in Betracht, die neben der Hydroxyl-Gruppe eine weitere gegenüber Isocyanaten reaktive Gruppe tragen wie Monoalkohole mit einer oder mehreren primären und/oder sekundären Aminogruppen, z.B. Monoethanolamin.

Polyamine mit 2 oder mehr primären und/oder sekundären Aminogruppen werden vor allem dann eingesetzt, wenn die Kettenverlängerung bzw. Vernetzung in Gegenwart von Wasser stattfinden soll, da Amine in der Regel schneller als Alkohole oder Wasser mit Isocyanaten reagieren. Das ist häufig dann erforderlich, wenn wässerige Dispersionen von vernetzten Polyurethanen oder Polyurethanen mit hohem Molgewicht gewünscht werden. In solchen Fällen geht man so vor, daß man Prepolymere mit Isocyanatgruppen herstellt, diese rasch in Wasser dispergiert und anschließend durch Zugabe von Verbindungen mit mehreren gegenüber Isocyanaten reaktiven Aminogruppen kettenverlängert oder vernetzt.

Hierzu geeignete Amine sind im allgemeinen polyfunktionelle Amine des Molgewichtsbereiches von 32 bis 500 g/mol, vorzugsweise von 60 bis 300 g/mol, welche mindestens zwei Aminogruppen, ausgewählt aus der Gruppe der primären und sekundären Aminogruppen, enthalten. Beispiele hierfür sind Diamine wie Diaminoethan, Diaminopropane, Diaminobutane, Diaminohexane, Piperazin, 2,5-Dimethylpiperazin, Amino-3-aminomethyl-3,5,5-trimethyl-cyclohexan (Isophorondiamin, IPDA), 4,4' -Diaminodicyclohexylmethan, 1,4-Diaminocyclohexan, Aminoethylethanolamin, Hydrazin, Hydrazinhydrat oder Triamine wie Diethylentriamin oder 1,8-Diamino-4-aminomethyloctan.

Die Amine können auch in blockierter Form, z.B. in Form der entsprechenden Ketimine (siehe z.B. CA-A 1 129 128), Ketazine (vgl. z.B. die US-A 4 269 748) oder Aminsalze (s. US-A 4 292 226) eingesetzt werden. Auch Oxazolidine, wie sie beispielsweise in der US-A 4 192 937 verwendet werden, stellen verkappte Polyamine dar, die für die Herstellung der erfindungsgemäßen Polyurethane zur Kettenverlängerung der Prepolymeren eingesetzt werden können. Bei der Verwendung derartiger verkappter Polyamine werden diese im Allgemeinen mit den Prepolymeren in Abwesenheit von Wasser vermischt und diese Mischung anschließend mit dem Dispersionswasser oder einem Teil des Dispersionswassers vermischt, so daß hydrolytisch die entsprechenden Polyamine freigesetzt werden.

Bevorzugt werden Gemische von Di- und Triaminen verwendet, besonders bevorzugt Gemische von Isophorondiamin (IPDA) und Diethylentriamin (DETA).

Die Polyurethane enthalten bevorzugt 1 bis 30, besonders bevorzugt 4 bis 25 mol-%, bezogen auf die Gesamtmenge der Komponenten (b) und (d) eines Polyamins mit mindestens 2 gegenüber Isocyanaten reaktiven Aminogruppen als Monomere (d).

Alkohole mit einer höheren Wertigkeit als 2, die zur Einstellung eines gewissen Verzweigungs- oder Vernetzungsgrades dienen können, sind z.B. Trimethylolpropan, Glycerin oder Zucker.

Für den gleichen Zweck können auch als Monomere (d) höher als zweiwertige Isocyanate eingesetzt werden. Handelsübliche Verbindungen sind beispielsweise das Isocyanurat oder das Biuret des Hexamethylendiisocyanats.

**Monomere (e),** die gegebenenfalls mitverwendet werden, sind Monoisocyanate, Monoalkohole und monoprimäre und -sekundäre Amine. Im Allgemeinen beträgt ihr Anteil maximal 10 mol-%, bezogen auf die gesamte Molmenge der Monomere. Diese monofunktionellen Verbindungen tragen üblicherweise weitere funktionelle Gruppen wie olefinische Gruppen oder Carbonylgruppen und dienen zur Einführung von funktionellen Gruppen in das Polyurethan, die die Dispergierung bzw. die Vernetzung oder weitere polymeranaloge Umsetzung des Polyurethans ermöglichen. In Betracht kommen hierfür Monomere wie Isopropenyl-a,a-dimethylbenzylisocyanat (TMI) und Ester von Acryl- oder Methacrylsäure wie Hydroxyethylacrylat oder Hydroxyethylmethacrylat.

Überzüge mit einem besonders guten Eigenschaftsprofil erhält man vor allem dann, wenn als Monomere (a) im Wesentlichen nur aliphatische Diisocyanate, cycloaliphatische Diisocyanate oder TMXDI und als Monomer (b1) im wesentlichen nur Polyesterdiole, aufgebaut aus den genannten aliphatischen Diolen und Disäuren, eingesetzt werden.

Diese Monomerkombination wird in hervorragender Weise ergänzt als Komponente (c) durch Diaminosäure-Salze; ganz besonders durch die N-(2-Aminoethyl)-2-aminoethansulfonsäure, die N- (2- Aminoethyl)- 2- aminoethancarbonsäure bzw. ihre entsprechenden Alkalisalze, wobei die Na-Salze am besten geeignet sind, und eine Mischung von DETA/IPDA als Komponente (d).

Auf dem Gebiet der Polyurethanchemie ist allgemein bekannt, wie das Molekulargewicht der Polyurethane durch Wahl der Anteile der miteinander reaktiven Monomere sowie dem arithmetischen Mittel der Zahl der reaktiven funktionellen Gruppen pro Molekül eingestellt werden kann.

Normalerweise werden die Komponenten (a) bis (e) sowie ihre jeweiligen Molmengen so gewählt, daß das Verhältnis A : B mit
A) der Molmenge an Isocyanatgruppen und
B) der Summe aus der Molmenge der Hydroxylgruppen und der Molmenge der funktionellen Gruppen, die mit Isocyanaten in einer Additionsreaktion reagieren können 0,5 : 1 bis 2 : 1, bevorzugt 0,8 : 1 bis 1,5, besonders bevorzugt 0,9 : 1 bis 1,2 : 1 beträgt. Ganz besonders bevorzugt liegt das Verhältnis A : B möglichst nahe an 1 : 1.

Die eingesetzten Monomere (a) bis (e) tragen im Mittel üblicherweise 1,5 bis 2,5, bevorzugt 1,9 bis 2,1, besonders bevorzugt 2,0 Isocyanatgruppen bzw. funktionelle Gruppen, die mit Isocyanaten in einer Additionsreaktion reagieren können.

Die Polyaddition der Komponenten (a) bis (e) zur Herstellung des im den erfindungsgemäßen wässrigen Dispersionen vorliegenden Polyurethans kann bei Reaktionstemperaturen von 20 bis 180°C, bevorzugt 70 bis 150°C unter Normaldruck oder unter autogenem Druck erfolgen.

Die erforderlichen Reaktionszeiten liegen üblicherweise im Bereich von 1 bis 20 Stunden, insbesondere im Bereich von 1,5 bis 10 Stunden. Es ist auf dem Gebiet der Polyurethanchemie bekannt, wie die Reaktionszeit durch eine Vielzahl von Parametern wie Temperatur, Konzentration der Monomere, Reaktivität der Monomeren beeinflusst wird.

Die Polyaddition der Monomere a), b), c) sowie gegebenenfalls d) und e) zur Herstellung der Polyurethan-Dispersion erfolgt bevorzugt in Anwesenheit eines Cäsiumsalzes. Bevorzugte Cäsiumsalze sind dabei Verbindungen, in denen folgende Anionen eingesetzt werden: F⁻, Cl⁻, ClO⁻, ClO₃⁻, ClO₄⁻, Br⁻, J⁻, JO₃⁻, CN⁻, OCN⁻, NO₂⁻, NO₃⁻, HCO₃⁻, CO₃²⁻, S²⁻, SH⁻, HSO₃⁻, SO₃²⁻, HSO₄⁻, SO₄²⁻, S₂O₂²⁻, S₂O₄²⁻, S₂O₅²⁻, S₂O₆²⁻, S₂O₇²⁻, S₂O₈²⁻, H₂PO₂⁻, H₂PO₄⁻, HPO₄²⁻, PO₄³⁻, P₂O₇⁴⁻, (OCₙH₂ₙ₊₁)⁻, (CₙH_{2n- 1}O₂)⁻, (CₙH_{2n- 3}O₂)⁻ sowie (Cₙ₊₁H₂ₙ₋₂O₄)²⁻, wobei n für die Zahlen 1 bis 20 steht. Besonders bevorzugt sind dabei Cäsiumcarboxylate, bei denen das Anion den Formeln (CₙH_{2n- 1}O₂)⁻ sowie (Cₙ₊₁H_{2n- 2}O₄)²⁻ mit n gleich 1 bis 20, gehorcht. Ganz besonders bevorzugte Cäsiumsalze weisen als Anionen Monocarboxylate der allgemeinen Formel (CₙH_{2n- 1}O₂)⁻ auf, wobei n für die Zahlen 1 bis 20 steht. Hierbei sind insbesondere zu erwähnen Formiat, Acetat, Propionat, Hexanoat und 2- Ethylhexanoat. Die Cäsiumsalze werden in Mengen von 0,01 bis 10 mmol Cäsiumsalz pro kg lösungsmittelfreier Ansatz eingesetzt. Bevorzugt werden sie in Mengen von 0,05 bis 2 mmol Cäsiumsalz pro kg lösungsmittelfreier Ansatz verwendet.

Die Cäsiumsalze können dem Ansatz in fester Form, bevorzugt jedoch in gelöster Form zugesetzt werden. Als Lösemittel sind polare, aprotische Lösemittel oder auch protische Lösemittel geeignet. Besonders geeignet sind neben Wasser auch Alkohole; ganz besonders geeignet sind Polyole, wie sie auch sonst als Bausteine für Polyurethane verwendet werden, wie z.B. Ethan-, Propan- und Butandiole. Die Verwendung der Cäsiumsalze erlaubt es, die Polyaddition unter den üblichen Bedingungen zu führen.

Als Polymerisationsapparate zur Durchführung der Polyaddition kommen Rührkessel in Betracht, insbesondere dann, wenn durch Mitverwendung von Lösungsmitteln für eine niedrige Viskosität und eine gute Wärmeabfuhr gesorgt ist.

Bevorzugte Lösungsmittel sind mit Wasser unbegrenzt mischbar, weisen einen Siedepunkt bei Normaldruck von 40 bis 100°C auf und reagieren nicht oder nur langsam mit den Monomeren.

Meistens werden die Dispersionen nach einem der folgenden Verfahren hergestellt:
Nach dem " Acetonverfahren" wird in einem mit Wasser mischbaren und bei Normaldruck unter 100°C siedenden Lösungsmittel aus den Komponenten (a) bis (c) ein ionisches Polyurethan hergestellt. Es wird soviel Wasser zugegeben, bis sich eine Dispersion bildet, in der Wasser die kohärente Phase darstellt.

Das " Prepolymer-Mischverfahren" unterscheidet sich vom Acetonverfahren darin, dass nicht ein ausreagiertes (potentiell) ionisches Polyurethan, sondern zunächst ein Prepolymer hergestellt wird, das Isocyanat-Gruppen trägt. Die Komponenten werden hierbei so gewählt, dass das definitionsgemäße Verhältnis A:B größer 1,0 bis 3, bevorzugt 1,05 bis 1,5 beträgt. Das Prepolymer wird zuerst in Wasser dispergiert und anschließend gegebenenfalls durch Reaktion der Isocyanat-Gruppen mit Aminen, die mehr als 2 gegenüber Isocyanaten reaktive Aminogruppen tragen, vernetzt oder mit Aminen, die 2 gegenüber Isocyanaten reaktive Aminogruppen tragen, kettenverlängert. Eine Kettenverlängerung findet auch dann statt, wenn kein Amin zugesetzt wird. In diesem Fall werden Isocyanatgruppen zu Aminogruppen hydrolysiert, die mit noch verbliebenen Isocyanatgruppen der Prepolymere unter Kettenverlängerung abreagieren.

Üblicherweise wird, falls bei der Herstellung des Polyurethans ein Lösungsmittel mitverwendet wurde, der größte Teil des Lösungsmittels aus der Dispersion entfernt, beispielsweise durch Destillation bei vermindertem Druck. Bevorzugt weisen die Dispersionen einen Lösungsmittelgehalt von weniger als 10 Gew.-% auf und sind besonders bevorzugt frei von Lösungsmitteln.

Die Dispersionen haben im allgemeinen einen Feststoffgehalt von 10 bis 75, bevorzugt von 20 bis 65 Gew.-% und eine Viskosität von 10 bis 500 m Pas (gemessen bei einer Temperatur von 20°C und einer Schergeschwindigkeit von 250 s⁻¹).

Hydrophobe Hilfsmittel, die unter Umständen nur schwierig homogen in der fertigen Dispersion zu verteilen sind wie beispielsweise Phenol-Kondensationsharze aus Aldehyden und Phenol bzw. Phenolderivaten oder Epoxidharze und weitere z.B. in der DE-A 3903538, 43 09 079 und 40 24 567 genannten Polymere, die in Polyurethandispersionen beispielsweise als Haftungsverbesserer dienen, können nach den in den beiden oben genannten Schriften beschriebenen Methoden dem Polyurethan oder dem Prepolymeren bereits vor der Dispergierung zugesetzt werden.

Die Polyurethan-Dispersionen können handelsübliche Hilfs- und Zusatzstoffe wie Treibmittel, Entschäumer, Emulgatoren, Verdickungsmittel und Thixotropiermittel, Farbmittel wie Farbstoffe und Pigmente enthalten.

Die Dispersion ist bevorzugt weitgehend frei, insbesondere ganz frei von organometallischen Verbindungen, wie **Organozinn-Verbindungen.**
Die **Dispersion** eines Polyurethans kann als Emulsion oder Suspension vorliegen, bevorzugt ist das Polyurethan suspendiert. In der Regel weisen die Polyurethan Partikel eine Partikelgrößenverteilung mit einem D50-Wert von 0,05 bis 10 µm, bevorzugt 0,1 bis 5 µm auf, wobei der D50 Wert durch dynamische Lichtstreuung ermittelt werden kann.

Die wässrige, Pestizid-haltige Dispersion kann beliebige **Pestizide** enthalten. Der Begriff Pesti**zide** bezeichnet mindestens einen Wirkstoff ausgewählt aus der Gruppe der Fungizide, Insektizide, Nematizide, Herbizide, Safener und/oder Wachstumsregulatoren. Bevorzugte Pestizide sind Fungizide, Insektizide, Herbizide, und Wachstumsregulatoren. Besonders bevorzugte Pestizide sind Wachstumsregulatoren. Auch Mischungen von Pestiziden aus zwei oder mehr der vorgenannten Klassen können verwendet werden. Der Fachmann ist vertraut mit solchen Pestiziden, die beispielsweise in Pesticide Manual, 16th Ed. (2012), The British Crop Protection Council, London, gefunden werden können. Geeignete Insektizide sind Insektizide der Klasse der Carbamate, Organophophate, Organochlor-Insektizide, Phenylpyrazole, Pyrethroide, Neonicotinoide, Spinosine, Avermectine, Milbemycine, Juvenil Hormon Analoga, Alkylhalide, Organozinn-Verbindungen, Nereistoxin-Analoga, Benzoylharnstoffe, Diacylhydrazine, METI Akarizide, sowie Insektizide wie Chloropicrin, Pymetrozin, Flonicamid, Clofentezin, Hexythiazox, Etoxazol, Diafenthiuron, Propargit, Tetradifon, Chlorfenapyr, DNOC, Buprofezin, Cyromazin, Amitraz, Hydramethylnon, Acequinocyl, Fluacrypyrim, Rotenon, oder deren Derivate. Geeignete Fungizide sind Fungizide der Klassen Dinitroaniline, Allylamine, Anilinopyrimidine, Antibiotica, aromatische Kohlenwasserstoffe, Benzenesulfonamide, Benzimidazole, Benzisothiazole, Benzophenone, Benzothiadiazole, Benzotriazine, Benzylcarbamate, Carbamates, Carboxamide, Carbonsäureamide, Chloronitrile, Cyanoacetamideoxime, Cyanoimidazole, Cyclopropanecarboxamide, Dicarboximide, Dihydrodioxazine, Dinitrophenylcrotonate, Dithiocarbamate, Dithiolane, Ethylphosphonate, Ethylaminothiazolcarboxamide, Guanidines, Hydroxy-(2-amino-)pyrimidine, Hydroxy¬anilides, Imidazole, Imidazolinone, Anorganika, Isobenzofuranone, Methoxyacrylate, Methoxycarbamates, Morpholines, N-Phenylcarbamate, Oxazolidinedione, Oximinoacetate, Oximinoacetamide, Peptidylpyrimidinnucleoside, Phenylacetamide, Phenylamide, Phenylpyrrole, Phenylharnstoffe, Phosphonate, Phosphorothiolate, Phthalamsäuren, Phthalimide, Piperazine, Piperidine, Propionamide, Pyridazinone, Pyridine, Pyridinylmethylbenzamide, Pyrimidinamine, Pyrimidine, Pyrimidinonehydrazone, Pyrroloquinolinone, Quinazolinone, Chinoline, Chinone, Sulfamide, Sulfamoyltriazole, Thiazolecarboxamide, Thiocarbamate, Thiophanate, Thiophenecarboxamide, Toluamide, Triphenylzinn Verbindungen, Triazine, Triazole. Geeignete Herbizide sind Herbizide der Klassen der Acetamide, Amide, Aryloxyphenoxypropionate, Benzamide, Benzofuran, Benzoesäuren, Benzothiadiazinone, Bipyridylium, Carbamate, Chloroacetamide, Chlorcarbonsäuren, Cyclohexanedione, Dinitroaniline, Dinitrophenol, Diphenylether, Glycine, Imidazolinone, Isoxazole, Isoxazolidinone, Nitrile, N-phenylphthalimide, Oxadiazole, Oxazolidinedione, Oxyacetamide, Phenoxycarbonsäuren, Phenylcarbamate, Phenylpyrazole, Phenylpyrazoline, Phenylpyridazine, Phosphinsäuren, Phosphoroamidate, Phosphorodithioate, Phthalamate, Pyrazole, Pyridazinone, Pyridine, Pyridincarbonsäuren, Pyridinecarboxamide, Pyrimidindione, Pyrimidinyl(thio)benzoate, Chinolincarbonsäuren, Semicarbazone, Sulfonylaminocarbonyltriazolinone, Sulfonylharnstoffe, Tetrazolinone, Thiadiazole, Thiocarbamate, Triazine, Triazinone, Triazole, Triazolinone, Triazolocarboxamide, Triazolopyrimidine, Triketone, Uracile, Harnstoffe.

Bevorzugte Pestizide sind Funigzide, wie
A) Strobilurine:
   Azoxystrobin, Dimoxystrobin, Enestroburin, Fluoxastrobin, Kresoxim-methyl, Metominostrobin, Orysastrobin, Picoxystrobin, Pyraclostrobin, Pyribencarb, Trifloxystrobin, 2-(2-(6-(3-Chlor-2-methyl-phenoxy)-5-fluor-pyrimidin-4-yloxy)-phenyl)-2-methoxyimino-N-methyl-acetamid, 2-(ortho-((2,5-Dimethylphenyl-oxymethylen)phenyl)-3-methoxy-acrylsäuremethylester, 3-Methoxy-2-(2-(N-(4-methoxy-phenyl)-cyclopropanecarboximidoylsulfanylmethyl)-phenyl)-acrylic acid methyl ester, 2-(2-(3-(2,6-dichlorphenyl)-1-methyl-allylideneaminooxymethyl)-phenyl)-2-methoxyimino-N-methyl-acetamide; und
B) Carbonsäureanilide: Benalaxyl, Benalaxyl-M, Benodanil, Bixafen, Boscalid, Carboxin, Fenfuram, Fenhexamid, Flutolanil, Furametpyr, Isopyrazam, Isotianil, Kiralaxyl, Mepronil, Metalaxyl, Metalaxyl-M (Mefenoxam), Ofurace, Oxadixyl, Oxycarboxin, Penthiopyrad, Tecloftalam, Thifluzamide, Tiadinil, 2-Amino-4-methyl-thiazol-5-carboxanilid, 2-Chlor-N-(1,1,3-trimethyl-indan-4-yl)nicotinamid, N-(2',4'-Difluorbiphenyl-2-yl)-3-difluormethyl-1-methyl-1H-pyrazol-4-carboxamid, N-(2',4'-Dichlorbiphenyl-2-yl)-3-difluormethyl-1-methyl-1H-pyrazol-4-carboxamid, N-(2',5'-Difluorbiphenyl-2-yl)-3-difluormethyl-1-methyl-1H-pyrazol-4-carboxamid, N-(2',5'-Dichlorbiphenyl-2-yl)-3-difluormethyl-1-methyl-1 H-pyrazole-4-carboxamid, N-(3',5'-Difluorbiphenyl-2-yl)-3-difluormethyl-1-methyl-1H-pyrazol-4-carboxamid, N-(3',5'-Dichlorbiphenyl-2-yl)-3-difluormethyl-1-methyl-1H-pyrazol-4-carboxamid, N-(3'-Fluorbiphenyl-2-yl)-3-difluormethyl-1-methyl-1H-pyrazol-4-carboxamid, N-(3'-Chlorbiphenyl-2-yl)-3-difluormethyl-1-methyl-1H-pyrazol-4-carboxamid, N-(2'-Fluorbiphenyl-2-yl)-3-difluormethyl-1-methyl-1H-pyrazol-4-carboxamid, N-(2'-Chlorbiphenyl-2-yl)-3-difluormethyl-1-methyl-1H-pyrazol-4-carboxamid, N-(3',4',5'-Trifluorbiphenyl-2-yl)-3-difluormethyl-1-methyl-1H-pyrazol-4-carboxamid, N-(2',4',5'-Trifluorbiphenyl-2-yl)-3-difluormethyl-1-methyl-1H-pyrazol-4-carboxamid, N-[2-(1,1,2,3,3,3-Hexafluorpropoxy)-phenyl]-3-difluormethyl-1-methyl-1H-pyrazol-4-carboxamid, N-[2-(1,1,2,2-Tetrafluoroethoxy)-phenyl]-3-difluormethyl-1-methyl-1H-pyrazol-4-carboxamid, N-(4'-Trifluormethylthiobiphenyl-2-yl)-3-difluormethyl-1-methyl-1H-pyrazol-4-carboxamid, N-(2-(1,3-Dimethyl-butyl)-phenyl)-1,3-dimethyl-5-fluor-1H-pyrazol-4-carboxamid, N-(2-(1,3,3-Trimethyl-butyl)-phenyl)-1,3-dimethyl-5-fluor-1H-pyrazol-4-carboxamid, N-(4'-Chlor-3',5'-difluorbiphenyl-2-yl)-3-difluormethyl-1-methyl-1H-pyrazol-4-carboxamid, N-(4'-Chlor-3',5'-difluorbiphenyl-2-yl)-3-trifluormethyl-1-methyl-1H-pyrazol-4-carboxamid, N-(3',4'-Dichlor-5'-fluorbiphenyl-2-yl)-3-trifluormethyl-1-methyl-1H-pyrazol-4-carboxamid, N-(3',5'-Difluor-4'-methyl-biphenyl-2-yl)-3-difluormethyl-1-methyl-1H-pyrazol-4-carboxamid, N-(3',5'-Difluor-4'-methyl-biphenyl-2-yl)-3-trifluormethyl-1-methyl-1H-pyrazol-4-carboxamid, N-(2-Bi-cyclopropyl-2-yl-phenyl)-3-difiuormethyl-1-methyl-1H-pyrazol-4-carboxamid, N-(cis-2-Bicyclopropyl-2-yl-phenyl)-3-difluormethyl-1-methyl-1H-pyrazol-4-carboxamid, N-(trans-2-Bicyclopropyl-2-yl-phenyl)-3-difluormethyl-1-methyl-1H-pyrazol-4-carboxamid, N-[1,2,3,4-Tetrahydro-9-(1-methylethyl)-1,4-methanonaphthalen-5-yl]-3-(difluormethyl)-1-methyl-1 H-pyrazol-4-carboxamid.

Das Pestizid ist bevorzugt mindestens ein **Fungizid,** speziell aus der Klasse der Strobilurine oder Carbonsäureanilide. Besonders bevorzugt ist das Pestizid Pyraclostrobin, Boscalid oder die Mischung aus Pyraclostrobin und Boscalid. In einer weiteren bevorzugten Ausführungsform umfasst das Pestizid Boscalid. In einer weiteren bevorzugten Ausführungsform umfasst das Pestizid Boscalid und Pyraclostrobin. In einer weiteren bevorzugten Ausführungsform umfasst das Pestizid Fluxapyroxad.

Die Menge an Pestizid in der Dispersion richtet sich in erster Linie nach der Art der Aufbringung. In der Regel wird das **Gewichtsverhältnis von Pestizid zu Polyurethan** im Bereich von 1:100 bis 1:1 und insbesondere im Bereich von 1:85 bis 1:2 und speziell im Bereich von 1:65 bis 1:5 liegen.

Die Dispersion hat üblicherweise eine Viskosität (wahre Viskosität gemessen bei 25 °C und einer Scherrate von 100 s⁻¹) im Bereich von 2 bis 500 mPas, bevorzugt von 5 bis 100 mPas und insbesondere 10 bis 50 mPas.

Die Dispersion enthält meist **Formulierungshilfsmittel,** wobei sich die Wahl der Hilfsmittel üblicherweise nach der konkreten Anwendungsform oder dem Pestizid richtet. Beispiele für geeignete Hilfsmittel sind Lösungsmittel, oberflächenaktive Stoffe (wie Tenside, Solubilisatoren, Schutzkolloide, Netzmittel und Haftmittel), organische und anorganische Verdicker, Frostschutzmittel, Entschäumer, ggf. Farbstoffe und Kleber (z. B. für Saatgutbehandlung).

Als **oberflächenaktive Stoffe** (Adjuvantien, Netz-, Haft-, Dispergier- oder Emulgiermittel) kommen die Alkali-, Erdalkali-, Ammoniumsalze von aromatischen Sulfonsäuren, z. B. von Lignin-(Borresperse^{®}-Typen, Borregaard, Norwegen), Phenol-, Naphthalin-(Morwet^{®}-Typen, Akzo Nobel, USA) und Dibutylnaphthalinsulfonsäure (Nekal^{®}-Typen, BASF, Deutschland), sowie von Fettsäuren, Alkyl- und Alkylarylsulfonaten, Alkyl-, Laurylether- und Fettalkoholsulfaten, sowie Salze sulfatierter Hexa-, Hepta- und Octadecanole sowie von Fettalkoholglykolethern, Kondensationsprodukte von sulfoniertem Naphthalin und seiner Derivate mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenyl-, Tributylphenylpolyglykolether, Alkylarylpolyetheralkohole, Isotridecylalkohol, Fettalkoholethylenoxid-Kondensate, ethoxyliertes Rizinusöl, Polyoxyethylen- oder Polyoxypropylenalkylether, Laurylalkoholpolyglykoletheracetat, Sorbitester, Lignin-Sulfitablaugen sowie Proteine, denaturierte Proteine, Polysaccharide (z.B. Methylcellulose), hydrophob modifizierte Stärken, Polyvinylalkohol (Mowiol^{®}-Typen, Clariant, Schweiz), Polycarboxylate (Sokalan^{®}-Typen, BASF, Deutschland), Polyalkoxylate, Polyvinylamin (Lupamin^{®}-Typen, BASF, Deutschland), Polyethylenimin (Lupasol^{®}-Typen, BASF, Deutschland), Polyvinylpyrrolidon und deren Copolymere in Betracht. Als **Tenside** kommen insbesondere anionische, kationische, nicht-ionische und amphotere Tenside, Blockpolymere und Polyelektrolyte in Betracht. Geeignete **anionische** Tenside sind Alkali-, Erdalkali- oder Ammoniumsalze von Sulfonaten, Sulfaten, Phosphaten oder Carboxylaten. Beispiele für Sulfonate sind Alkylarylsulfonate, Diphenylsulfonate, alpha-Olefinsulfonate, Sulfonate von Fettsäuren und Ölen, Sulfonate von ethoxylierten Alkylphenolen, Sulfonate von kondensierten Naphtalinen, Sulfonate von Dodecyl und Tridecylbenzolen, Sulfonate von Naphthalinen und Alkylnaphthalinen, Sulfosuccinate oder Sulfosuccinamate. Beispiele für Sulfate sind Sulfate von Fettsäuren und Ölen, von ethoxylierten Alkylphenolen, von Alkoholen, von ethoxylierten Alkoholen, oder von Fettsäureestern. Beispiele für Phosphate sind Phosphatester. Beispiele für Carboxylate sind Alkylcarboxylate und carboxylierte Alkohol- oder Alkylphenolethoxylate. Geeignete **nicht-ionische** Tenside sind Alkoxylate, N-alkylierte Fettsäureamide, Aminoxide, Ester oder Zucker-basierte Tenside. Beispiele für Alkoxylate sind Verbindungen, wie Alkohole, Alkylphenole, Amine, Amide, Arylphenole, Fettsäuren oder Fettsäureester, die alkoxyliert wurden. Zur Alkoxylierung kann Ethylenoxid und/oder Propylenoxid eingesetzt werden, bevorzugt Ethylenoxid. Beispiele für N-alkylierte Fettsäureamide sind Fettsäureglucamide oder Fettsäurealkanolamide. Beispiele für Ester sind Fettsäureester, Glycerinester oder Monoglyceride. Beispiele für Zucker-basierte Tenside sind Sorbitane, ethoxilierte Sorbitane, Saccharose- und Glucoseester oder Alkylpolyglucoside. Geeignete **kationische** Tenside sind quarternäre Tenside, beispielsweise quartäre Ammonium-Verbindungen mit einer oder zwei hydrophoben Gruppen, oder Salze langkettiger primärer Amine. Geeignete **amphothere** Tenside sind Alkylbetaine und Imidazoline. Geeignete **Blockpolymere** sind Blockpolymere vom A-B oder A-B-A Typ umfassend Blöcke aus Polyethylenoxid und Polypropylenoxid oder vom A-B-C Typ umfassend Alkanol, Polyethylenoxid und Polypropylenoxid. Geeignete **Polyelektrolyte** sind Polysäuren oder Polybasen. Beispiele für Polysäuren sind Alkalisalze von Polyacrylsäure. Beispiele für Polybasen sind Polyvinylamine oder Polyethylenamine.

Bevorzugt enthält die Dispersion weniger als 10 Gew.%, besonders bevorzugt weniger als 7 Gew.%, insbesondere weniger als 5 Gew.% und speziell weniger als 2 Gew.% Gesamtmenge von nichtionischen Tensiden. Zur Berechnung dieses Gehalts an nichtionischen Tenside werden auch nichtionische Tenside eingerechnet, die für andere Zwecke zugesetzt wurden, wie als Adjuvantien oder als Spreitungsmittel.

Beispiele für **Adjuvantien** sind organisch modifizierte Polysiloxane, wie BreakThruS 240^{®}; Alkoholalkoxylate, wie Atplus^{®}245, Atplus^{®}MBA 1303, Plurafac^{®}LF und Lutensol^{®} ON ; EO-PO-Blockpolymerisate, z. B. Pluronic^{®} RPE 2035 und Genapol^{®} B; Alkoholethoxylate, z. B. Lutensol^{®} XP 80; und Natriumdioctylsulfosuccinat, z. B. Leophen^{®} RA.

Beispiele für **Verdicker** (d.h. Verbindungen, die der Zusammensetzung ein modifiziertes Fließverhalten verleihen, d. h. hohe Viskosität im Ruhezustand und niedrige Viskosität im bewegten Zustand) sind Polysaccharide, wie Xanthan (Kelzan^{®}, CP Kelco Inc.; Rhodopol^{®} 23, Rhodia), anorganische Schichtmineralien, wie Magnesium-Aluminium-Silikate (Veegum^{®} - Typen, R.T. Vanderbilt; Attapulgit von Attaclay), oder Organoschichtsilicate, wie mit quartären Ammoniumsalzen nachbehandelte Smektite.

Zur Verbesserung der Filmbildung, insbesondere bei niedrigen Temperaturen bei der Applikation, kann man **Filmbildehilfsmittel** zugeben. Beispiele für Filmbildehilfsmittel sind flüchtige Kohlenwasserstoffe wie Benzinfraktionen, Weißöle, flüssige Paraffine, Glykole wie Butylenglykol, Ethylenglykol, Diethylenglykol und 1,2-Propylenglykol, Glykolether wie Glykolbutylether, Diethylenglykolmonobutylether (Butyldiglykol),1-Methoxy-2-propanol, Dipropylenglykolmethylether, Dipropylenglykolpropylether, Dipropylenglykol-n-buthylether, Tripropylenglykol-n-butylether, 2,3-Phenoxypropanol, Glykolester und -etherester wie Butylglykolacetat, Diethylenglykol-mono-n-butyletheracetat, 2,2,4-Trimethylpentan-1,3- diolmonoisobutyrat, Butylglykoldiacetat, Methoxypropylacetat. Bevorzugte Filmbildehilfsmittel sind Glykolether, Glykolester, Glykoletherester und 1,2-Propylenglykol, insbesondere Butyldiglykol, Methoxypropylacetat, und 1,2-Propylenglykol.

Beispiele für geeignete **Frostschutzmittel** sind Ethylenglycol, 1,2-Propylenglycol, Harnstoff und Glycerin, bevorzugt Glycerin. Beispiele für **Entschäumer** sind Silikonemulsionen (wie z. B. Silikon^{®} SRE, Wacker, Deutschland oder Rhodorsil^{®}, Rhodia, Frankreich), langkettige Alkohole, Fettsäuren, Salze von Fettsäuren, fluororganische Verbindungen und deren Gemische. Beispiele für **Kleber** sind Polyvinylpyrrolidon, Polyvinylacetat, Polyvinylalkohol und Celluloseether (Tylose^{®}, Shin-Etsu, Japan).

Die wässrige, Pestizid-haltige Dispersion eines Polyurethans kann auf beliebige **Pflanzen oder Pflanzenteile** aufgebracht werden. Das bedeutet, dass die Pflanze, die auf der Anbaufläche wächst, behandelt werden kann (beispielsweise durch großflächiges Besprühen einer Anbaufläche oder gezieltes Aufbringen auf einen Bereich an einer Pflanze, wie der Weinrebe) oder dass Pflanzenteile, die von der Pflanze abgetrennt wurden, behandelt werden können. Beispiele für Pflanzenteile, die von der Pflanze abgetrennt wurden, sind Samen, Wurzeln, Früchte, Knollen, Zwiebeln, Teile von Halmen, Teile von Ästen, und Rhizome.

Beliebige **Arten von Pflanzen** bzw. Pflanzenteile, die von beliebigen Arten von Pflanzen stammen, können behandelt werden. Beispiele sind Getreide, Rüben, Obst, Leguminosen, Soja, Raps, Senf, Oliven, Sonnenblumen, Kokosnuss, Kürbisgewächse, Baumwolle, Zitrusfrüchte, Gemüsepflanzen, Mais, Zuckerrohr, Ölpalme, Tabak, Kaffee, Tee, Bananen, Weinreben, Hopfen, Gras, Kautschukpflanzen, Zierpflanzen, Forstpflanzen. Als Pflanzen können auch solche verwendet werden, die durch Züchtung, einschließlich gentechnischer Methoden, gegen Insekten-, Viren-, Bakterien- oder Pilzbefall oder Herbizidapplikationen tolerant sind. Bevorzugte Arten von Pflanzen sind Holzpflanzen, insbesondere Obstbäume wie Pflaume, Pfirsich, Kirsche, Apfel, Birne, Mirabelle, und speziell Weinreben. Weinreben beliebiger Rebsorten können behandelt werden, wie Weißweinrebsorten und Rotweinrebsorten, z.B. Müller-Thurgau, Bacchus, Riesling, Scheurebe, Silvaner bzw. Dornfelder, Lemberger, Tempranillo und Trollinger als Rotweinrebsorten. In einer weiteren bevorzugten Ausführungsform sind Pflanzen Ölpalmen.

In Abhängigkeit von dem in der Zusammensetzung enthaltenen fungiziden Wirkstoff kann die Zusammensetzung zum Schutz der Holzpflanze vor einer Infektion den nachfolgenden **Pilzpathogenen** oder zur Behandlung von einer Infektion mit diesen Pilzpathogenen und/oder einer dadurch hervorgerufenen Erkrankung verwendet werden: *Botryosphaeria* Arten, *Cylindrocarpon* Arten, *Eutypa lata, Neonectria liriodendri* und *Stereum hirsutum, Ascomyceten, Deuteromyceten, Basidiomyceten, Peronosporomyceten* (syn. *Oomyceten),* und *Fungi imperfecti,* Ascomyceten wie *Ophiostoma* spp., *Ceratocystis* spp., *Aureobasidium pullulans, Sclerophoma* spp., *Chaetomium* spp., *Humicola* spp., *Petriella* spp., *Trichurus* spp.; Basidiomyceten wie *Coniophora* spp., *Coriolus* spp., *Gloeophyllum* spp., *Lentinus* spp., *Pleurotus* spp., *Poria* spp., *Serpula* spp. und *Tyromyces* spp., Deuteromyceten wie *Aspergillus* spp., *Cladosporium* spp., *Penicillium* spp., *Trichoderma* spp., *Alternaria* spp., *Paecilomyces* spp. und Zygomyceten wie *Mucor* spp., *Glomerella cingulata, Guignardia budelli, Isariopsis clavispora Phomopsis* Arten z.B. P. *viticola, Plasmopara viticola, Pseudopezicula tracheiphilai, Erysiphe* (syn. *Uncinula) necator, Ascomyceten, Deuteromyceten, Basidiomyceten, Peronosporomyceten* (syn. *Oomyceten)* und *Fungi imperfecti.*

Besonders geeignet ist die vorliegende Erfindung in einer Ausführungsform zum Schutz vor und der Behandlung von Erkrankungen durch: *Phaeomoniella chlamydospora, aleophilum, parasiticum, Phaeoacremonium spp. (aleophilum, inflatipes, chlamydosporum, angustius, viticola, rubrigenum, parasiticum), Formitipora mediterranea (syn. Phellinus punctatus, Phellinius igniarius Fomitiporia punctata), Eutypa lata, Eutypa armeniacae, Libertella blepharis, Stereum hirsutum, Phomopsis viticola, amygdalii, Botryosphaeria spp. (australis, dothidea, obtusa, stevensii, parva, rhodina), Cylindrocarpon spp. (destructans, optusisporum), Campylocarpon spp., Guignardia bidwellii, rubrigenum), Elsinoe ampelina, Verticilium, Armillaria mellea, Clitopilus hobsonii, Flammulina velutipes, Pleurotus pulmonarius, Inonotus hispidus, Trametes hirsuta, Trametes versicolor, Peniphora incarnate, Hirneola auriculae-judae, Diaporthe helianthi, ambigua, Pleurostomophora sp., Cadophora sp., Phialemonium sp..*

In einer Ausführungsform eignet sich die erfindungsgemäße Dispersion besonders zum Schutz und zur Bekämpfung von ***Elsinoe ampelina* an Weinrebe.** In einer bevorzugten Ausführungsform wird die Dispersion zum Schutz von Holzpflanzen, speziell Weinreben, vor **Esca** verwendet, d.h. zum Schutz von Holzpflanzen, speziell Weinreben, vor einer Infektion mit dem Komplex an Pathogenen, die mit der Krankheit Esca in Verbindung gebracht werden. Die Dispersion kann auch zur Behandlung von Esca in Holzpflanzen, speziell Weinreben, bzw. zur Behandlung von Holzpflanzen, die mit den Esca-verursachenden Pathogenen infiziert sind, verwendet werden. Wie bereits oben erläutert, wird diese Erkankung oft verursacht in Mitteleuropa durch die Hauptpathogene *Phaeomoniella chlamydospora, Phaeoacremonium spp. (aleophilum, inflatipes, chlamydosporum),* und *Formitipora mediterranea (syn. Phellinus punctatus, Fomitiporia punctata).* In diesem Fall enthält die Dispersion vorzugsweise wenigstens ein Strobilurin, insbesondere Pyraclostrobin, gegebenenfalls in Kombination mit wenigstens einem weiteren Fungizid, insbesondere Boscalid.

Die Erfindung betrifft weiterhin die Verwendung eines Pestizides zur Behandlung von Esca in Holzpflanzen (spezielle Weinreben), wobei das Pestizid Pyraclostrobin und Boscalid umfasst. Das Gewichtsverhältnis von Pyraclostrobin zu Boscalid kann in weiten Bereichen variieren, beispielsweise von 100 zu 1 bis 1 zu 100. Bevorzugt liegt es im Bereich von 10 zu 1 bis 1 zu 15, besonders bevorzugt von 3 zu 1 bis 1 zu 6, und insbesondere von 1 zu 1 bis 1 zu 3. In einer weiteren bevorzugten Ausführungsform liegen Pyraclostrobin und Boscalid in einem synergistisch wirksamen Gewichtsverhältnis vor. Das Pestizid kann in beliebigen, anwendungsfertigen Konzentrationen verwendet werden, beispielsweise in einer Konzentration von 0,01 bis 100 g/l Pyraclostrobin und 0,02 bis 200 g/l Boscalid, bevorzugt von 0,1 bis 10 g/l Pyraclostrobin und 0,2 bis 20 g/l Boscalid, besonders bevorzugt in einer Konzentration von 0,3 bis 3 g/l Pyraclostrobin und 0,5 bis 5 g/l Boscalid. Die Applikationsrate dieser anwendungsfertigen Konzentration kann 1 bis 300l/ha betragen, bevorzugt 20 bis 150l/ha, besonders bevorzugt bevorzugt 30 bis 90l/ha.

Das **Aufbringen** einer wässrigen, Pestizid-haltigen Dispersion eines Polyurethans auf Pflanzen oder Pflanzenteile kann in üblicher Weise erfolgen und richtet sich in bekannter Weise nach der Art der zu behandelnden bzw. zu schützenden Pflanzen oder Pflanzenteile. Das Aufbringen kann durch Tupfen, Streichen, Tauchen, Pinseln oder Sprühen, bevorzugt durch Sprühen, erfolgen. Üblicherweise wird das Polyurethan auf die Oberfläche aufgebracht, wodurch Pestizid und gegebenenfalls das Polyurethan in den Oberflächenbereich eindringt. Das Polyurethan wiederum bildet eine dauerelastische geschlossene Schicht oder einen Film auf oder in der Oberfläche und verhindert auf diese Weise das Eindringen von Pflanzenpathogenen. Die entstandene Polyurethan-Schicht ist witterungsbeständig, Frost-, UV- und regenresistent, abriebfest und ungiftig für die Pflanze. Beim Aufbringen erreicht man hohe Eindringtiefen des Pestizids in das pflanzliche Material, wobei ein Eindringen bevorzugt in Richtung der Leitbündel erfolgt. Häufig ist die Eindringtiefe mindestens 0,2 cm, insbesondere mindestens 0,5 cm und besonders bevorzugt mindestens 1 cm, bis hin zu 2,5 cm oder 3 cm oder tiefer. Das Aufbringen erfolgt vorzugsweise bei **Temperaturen** im Bereich von -10°C bis +50°C, besonders bevorzugt im Bereich von -5°C bis +20°C und ganz besonders bevorzugt im Bereich von -3°C bis +10°C.

Bei den zu behandelnden bzw. zu schützenden **Wundstellen** kann es sich um natürliche Verletzungen, wie sie durch Windbruch, Frost oder sonstige Witterungseinwirkungen entstehen, oder insbesondere um die durch den Pflanzenschnitt hervorgerufenen Wundflächen handeln. Es kann sich um Wundstellen im Rindenbereich, aber auch um Wundstellen im Holzquerschnitt handeln, also um Säge- oder Schnittwunden.

Gemäß einer bevorzugten Ausführungsform erfolgt die Applikation durch **Sprühen** der Dispersion. Der Begriff "Versprühen" umfasst auch das Vernebeln, Verblasen und Verspritzen der Zusammensetzung. Zum Versprühen können übliche **Vorrichtungen** verwendet werden, wie beispielsweise handelsübliche Zerstäuber, Spritzgeräte, Handsprüher, sowie pneumatische oder manuelle Schnittscheren mit Sprühfunktion, mittels derer im Rahmen des üblichen Sprühvorgangs die Dispersion gezielt auf Schnittwunden aufgetragen werden können. Die Applikation kann gezielt im Wundbereich erfolgen oder die Dispersion kann **großflächig** auf die Pflanze oder Pflanzenteile aufgebracht werden. Gemäß einer besonders bevorzugten Ausführungsform der Erfindung erfolgt die Applikation durch ein so genanntes Tunnelsprühen, bei dem in Kulturen von Obstbäume oder Weinreben die Holzteile nach einer Schnittbehandlung gezielt im Schnittbereich mit einer Dispersion, gegebenenfalls nach Verdünnen, besprüht werden und überschüssiges Spritzmittel aufgefangen wird. Auf diese Weise werden die Schnittstellen und umliegende Holzteile behandelt.

In einer Ausführungsform wird die erfindungsgemäße Dispersion in einem **Mehrschrittverfahren** verwendet. So kann beispielsweise in einem ersten Arbeitsschritt ein erster Pflanzenschutzwirkstoff, insbesondere ein Fungizid, bzw. eine Wirkstoffaufbereitung dieses Wirkstoffs auf die zu behandelnde bzw. zu schützende Oberfläche aufgebracht werden, und in einem der folgenden Schritte wird dann die Dispersion in der hier beschriebenen Weise aufgebracht.

Die wässrige Pestizid-haltige Dispersion eines Polyurethans kann vor der Applikation verdünnt werden, beispielsweise mit Wasser, um so den sogenannten Tankmix zu erhalten. Die Dispersion kann aber auch als solche appliziert werden. Üblicherweise wird der Tankmix hergestellt durch **Verdünnen** der Dispersion auf das 2 bis 100 fache, bevorzugt das 5 bis 40 fache, und insbesondere das 10 bis 20 fache Volumen. Zum Tankmix oder auch erst unmittelbar vor der Herstellung des Tankmix aus der Dispersion können Öle verschiedenen Typs, Netzmittel, Adjuvants, weitere Pestizide, zugesetzt werden. Diese Mittel können im Gewichtsverhältnis Mittel zu Dispersion 1:100 bis 100:1, bevorzugt 1:10 bis 10:1 zugemischt werden.

Die Dispersion enthält üblicherweise **Wasser** in einer Konzentration von 250 bis 850 g/l, bevorzugt 350 bis 750 g/l und insbesondere 450 bis 650 g/l.

Die Dispersion enthält üblicherweise **Polyurethan** in einer Konzentration von 50 bis 650 g/l, bevorzugt 150 bis 450 g/l und insbesondere 200 bis 350 g/l.

Die Dispersion enthält üblicherweise **Pestizid** in einer Konzentration von 0,01 bis 300 g/l, bevorzugt 0,5 bis 100 g/l, insbesondere 2 bis 50 g/l.

Die Dispersion enthält üblicherweise **oberflächenaktive Stoffe** in einer Konzentration von 0,001 bis 40 g/l, bevorzugt 0,01 bis 25 g/l, insbesondere 0,05 bis 5 g/l.

Die Dispersion enthält üblicherweise **Verdicker** in einer Konzentration von 0,001 bis 5 g/l, bevorzugt 0,01 bis 0,5 g/l.

Die Dispersion enthält üblicherweise **Frostschutzmittel** in einer Konzentration von 0,05 bis 350 g/l, bevorzugt 0,1 bis 250 g/l, insbesondere 0,5 bis 150 g/l.

Die Dispersion kann optional **Filmbildehilfsmittel** enthalten in einer Konzentration von 10 bis 250 g/l, bevorzugt 50 bis 150 g/l.

Die Dispersion kann optional **Spreitungsmittel** enthalten in einer Konzentration von 0,1 bis 250 g/l, bevorzugt 1 bis 150 g/l, und insbesondere 5 bis 50 g/l. Als Spreitungsmittel sind alkoxilierte Alkohole geeignet, wobei der Alkohol bevorzugt ein linearer oder verzweigter, aliphatischer C₆ bis C₃₂ Monoalkohol ist und die Alkoxilierung mit C₂ bis C₆, bevorzugt C₂-Alkylenoxid durchgeführt wurde.

Die Erfindung betrifft weiterhin die **Verwendung** der erfindungsgemäßen Dispersion zur Bekämpfung von phytopathogenen Pilzen und/oder unerwünschtem Pflanzenwuchs und/oder unerwünschtem Insekten- oder Milbenbefall und/oder zur Regulation des Wachstums von Pflanzen, indem man die Dispersion auf die jeweiligen Schädlinge, deren Lebensraum und/oder die vor dem jeweiligen Schädling zu schützenden Pflanzen, Pflanzenteile, den Boden und/oder auf unerwünschte Pflanzen und/oder die Nutzpflanzen und/oder deren Lebensraum einwirken lässt. Die Einwirkung wird üblicherweise durch das Aufbringen der Dispersion erreicht.

Die Erfindung betrifft weiterhin Pflanzenteile, die von einer Pflanze abgetrennt wurden und auf die die erfindungsgemäße Dispersion aufgebracht wurde. Geeignete Pflanzenteile, Pflanzen und Dispersionen sind wie vorstehend beschrieben. Das Aufbringen kann wie vorstehend beschrieben erfolgen. Bevorzugt sind Pflanzenteile, die von einer Pflanze abgetrennt wurden und auf die die erfindungsgemäße Dispersion aufgebracht wurde, wobei das Pflanzenteil die Dispersion umfasst.

**Vorteile** des erfindungsgemäßen Verfahrens sind, dass die Dispersion einfach, beispielsweise durch Sprühen, aufgebracht werden kann. Die Dispersion verfilmt auch bereits bei niederen Temperaturen, beispielsweise unter 20 °C, sehr gut. Die Dispersion ist über lange Zeit lagerstabil, selbst bei erhöhten Temperaturen, und kann preiswert großtechnisch hergestellt werden. Weiterer Vorteil ist, dass die Dispersion bereits mit kleinen Konzentrationen an oberflächenaktiven Stoffen stabil ist, wodurch die Umweltbelastung durch die oberflächenaktiven Stoffe reduziert wird. Der Schutzfilm, der nach dem Aufbringen der Dispersion des Polyurethans entsteht, haftet gut und dauerhaft. Das Verfahren ist weiterhin sehr gut geeignet zur protektiven Behandlung pilzlicher Erkrankungen an Holzpflanzen, speziell zur Behandlung von Esca in Weinreben. Weiterhin ist es vorteilhaft zur kurativen Behandlung pilzlicher Erkrankungen an Holzpflanzen. Weiterer Vorteil ist die geringe Toxizität der Dispersion; die geringe Vergilbung der aufgebrachten Dispersion; die hohe UV-Beständigkeit der Dispersion; oder dass die Dispersion weithehend frei von organometallischen Verbindungen hergestellt werden kann.

Die folgenden Beispiele und Abbildungen dienen der Erläuterung der Erfindung.

### Beispiele

Tensid A: 33 Gew.% Kammpolmyer, erhältlich durch Polmyeriation aus Methylmethacrylat, Methacrylsäure und Methoxy-polyethyleneglykol-methacrylate, HLB 11-12.
Tensid B: EO-PO-EO Triblockcopolymer, Molmasse ca 6000-7000 g/mol, dabei ca 50 Gew% Anteil EO (Ethylenoxid).
Tensid C: Natriumsalz eines Kondensationsproduktes von Phenolsulfonsäure-Harnstoff-Formaldehyd.
Tensid C: Natriumsalz eines Kondensationsproduktes von Phenolsulfonsäure-Harnstoff-Formaldehyd.
Tensid D: Ammoniumsalz von Polyarylphenylethersulfat.

### Beispiel 1: Herstellung einer Polyurethan-Dispersion A

800,0 g (0,40 mol) eines Polyesterdiols aus Adipinsäure, Neopentylglykol und Hexan-diol-1,6 der OH-Zahl 56, 34,0 g (0,0099 mol) eines Butanol-gestarteten Polyethylenoxids der OH-Zahl 15, und 0,58 g einer Lösung von 1 g Cäsium-Acetat in 9 g Butandiol-1,4 wurden in einem Rührkolben vorgelegt und auf 70 °C gebracht. Dazu wurden 85,8 g (0,3248 mol) HMDI und 70,8 g (0,3185 mol) IPDI gegeben und 135 min bei 100 °C gerührt. Hernach wurde mit 1160 g Aceton verdünnt, auf 50 °C gekühlt und der NCO-Gehalt zu 0,99 Gew.-% bestimmt. 10 min nach der Zugabe von 44,6 g einer 50 %igen wässrigen Lösung des Natriumsalzes der 2-Aminoethyl-2-aminoethansulfonsäure wurde mit 1200 g Wasser dispergiert und dann mit 7,8 g DETA und 3,6 g IPDA in 100 g Wasser kettenverlängert. Nach Destillation des Acetons erhielt man eine feinteilige Dispersion mit ca. 40 % Festgehalt.

### Beispiel 2: Herstellung einer Pestizid-haltigen Dispersion A-D

Die folgenden Pestizid-haltigen Dispersion A-D wurden mit einer Zusammensetzung gemäß Tabelle 1 hergestellt.

**Tabelle 1: Zusammensetzunaen (alle Anaaben in g/l)**

| | A | B | C | D |
|---|---|---|---|---|
| Boscalid | 10 | 10 | | 10 |
| Pyraclostrobin | 5 | 5 | 5 | |
| Polyurethan-Dispersion A | 800 | 600 | 800 | 800 |
| Tensid A | 1.81 | 1.81 | | |
| Tensid B | | | 0.38 | 0.6 |
| Tensid C | | | 0.25 | 0.4 |
| Tensid D | 0.65 | 0.65 | | |
| Xanthan Verdicker | 0.12 | 1.62 | 0.03 | 0.04 |
| 1,2-Propylenglykol | 100 | 100 | 100 | 100 |
| Glycerin | 4.83 | 4.83 | | |
| Water, De-ionized | ad 1 l | ad 1 l | ad 1 l | ad 1 l |

## Patentansprüche

1. Verfahren zum Aufbringen einer wässrigen, Pestizid-haltigen Dispersion eines Polyurethans, welches aufgebaut ist aus Diisocyanaten (a) und Diolen (b), auf Pflanzen oder Pflanzenteile, wobei das Diisocyanat (a) höchstens 5 Gew.% aromatisches Diisocyanat und mindestens 95 Gew.% aliphatisches Diisocyanat enthält, jeweils bezogen auf das Diisocyanat (a).

2. Verfahren nach Anspruch 1, wobei das Diol (b) Diole (b1) und (b2) enthält, von denen b1
) 10 bis 100 mol-%, bezogen auf die Gesamtmenge der Diole (b), ein Molekulargewicht von 500 bis 5000 aufweisen, und
b2) 0 bis 90 mol-%, bezogen auf die Gesamtmenge der Diole (b), ein Molekular-gewicht von 60 bis 500 g/mol aufweisen.

3. Verfahren nach Anspruch 1 oder 2, wobei das Diol (b1) ein Polyesterpolyol ist erhältlich durch Umsetzung von zweiwertigen Alkoholen mit zweiwertigen Carbonsäuren.

4. Verfahren nach einem der Ansprüche 1 bis 3, wobei die Dispersion weitgehend frei von organometallischen Verbindungen ist.

5. Verfahren nach einem der Ansprüche 1 bis 4, wobei die Diisocyanate (a) Verbindungen der Formel X(NCO)₂ sind, wobei X für einen aliphatischen Kohlenwasserstoffrest mit 4 bis 12 Kohlenstoffatomen, oder einen cycloaliphatischen Kohlenwasserstoffrest mit 6 bis 15 Kohlenstoffatomen steht.

6. Verfahren nach einem der Ansprüche 1 bis 5, wobei das Diisocyanat 1-Isocyanato-3,5,5-trimethyl-5-isocyanatomethylcyclohexan (IPDI), und/oder Bis-(4-isocyanatocyclohexyl)methans (HMDI) umfasst.

7. Verfahren nach einem der Ansprüche 1 bis 6, wobei die Dispersion 10 bis 250 g/l eines Filmbildehilfsmittels umfasst.

8. Verfahren nach einem der Ansprüche 1 bis 7, wobei das Gewichtsverhältnis von Pestizid zu Polyurethan im Bereich von 1:100 bis 1:1 liegt.

9. Verfahren nach einem der Ansprüche 1 bis 8, wobei das Pestizid ein Fungizid ist, bevorzugt aus der Klasse der Strobilurine oder Carbonsäureanilide.

10. Verfahren nach einem der Ansprüche 1 bis 9, wobei die Dispersion das Polyurethan in einer Konzentration von 50 bis 650 g/l enthält.

11. Verfahren nach einem der Ansprüche 1 bis 10, wobei die Dispersion das Pestizid in einer Konzentration von 0,5 bis 100 g/l enthält.

12. Verfahren nach einem der Ansprüche 1 bis 11, wobei die Pflanzen Weinreben sind.

13. Verfahren nach einem der Ansprüche 1 bis 12, wobei die Dispersion auf durch einen Pflanzenschnitt hervorgerufenen Wundflächen aufgebracht wird.

14. Wässrige, Pestizid-haltige Dispersion des Polyurethans definiert wie in den Ansprüchen 1 bis 11.

15. Verwendung der Dispersion, wie sie in den Ansprüchen 1 bis 11 definiert ist, zur Bekämpfung von phytopathogenen Pilzen und/oder unerwünschtem Pflanzenwuchs und/oder unerwünschtem Insekten- oder Milbenbefall und/oder zur Regulation des Wachstums von Pflanzen, indem man die Dispersion auf die jeweiligen Schädlinge, deren Lebensraum und/oder die vor dem jeweiligen Schädling zu schützenden Pflanzen, Pflanzenteile, den Boden und/oder auf unerwünschte Pflanzen und/oder die Nutzpflanzen und/oder deren Lebensraum einwirken lässt.

16. Pflanzenteile, die von einer Pflanze abgetrennt wurden und auf die die Dispersion, wie sie in den Ansprüchen 1 bis 11 definiert ist, aufgebracht wurde.
